# EUROPEAN PATENT APPLICATION

(11) **EP 1 598 985 A1**
(43) Date of publication of application: **23.11.2005**
(21) Application number: 05253010.2
(22) Date of filing: 17.05.2005
(51) Int. Cl.: H04L 12/28

(54) **Intelligent wireless network switching**

(30) Priority: 17.05.2004 US 571505 P
(71) Applicant: Pointshot Wireless Inc., Ottawa, ON K2E 8A9 (CA)
(72) Inventor: Griffin, Shawn, Ottawa, Ontario K1S 1X9 (CA); Gallagher, Warren, Richmond, Ontario KOA 2Z0 (CA)
(74) Representative: Ahmad, Sheikh Shakeel

(57) **Abstract**

A system and method for managing network links in a mobile wireless device employs a database of connectivity profiles to allow geographic data to assist in the selection of network links to minimize down time and allow for proactive management of the network connection.

## Description

### FIELD OF THE INVENTION

The present invention relates generally to switching between wireless networks. More particularly, the present invention relates to proactively managing the switching between networks.

### BACKGROUND OF THE INVENTION

Many travelers avail themselves of opportunities to obtain data connections to networks such as the Internet. Typically, these connections employ wireless connectivity offered by fixed wireless networks offered in traveler lounges in airports and train stations or in other public access venues such as coffee shops, bookshops and restaurants. These accessibility zones are often referred to as Wi-Fi™ hotspots.

As a wireless device enters the connectivity region of the hotspot, it can dynamically connect to the hotspot's infrastructure including a wireless access point that bridges the local data network of the hotspot to a larger data network such as the Internet. The connection between the wireless access point and the data network is typically a fixed wired connection to provide a reliable connection. When the wireless device leaves the area served by the hotspot the data connection is severed. In many public environments, there are a plurality of data networks that can be selected from. A wireless device, such as a laptop computer with a wireless network card, selects from the list of the available wireless networks based on a set of predetermined criteria including signal strength, data rate and user defined criteria (including memberships in wireless networks that operate on a fee for service basis).

The service area of these hotspots is limited by the networking infrastructure installed. This infrastructure may include wireless access points, repeaters, routers, wireless hubs and other standard networking components. As a wireless device is moved geographically it can dynamically connect to a number of different networks as connections are established and lost due to the range of the different networks.

Wireless networks have conventionally been geographically fixed to allow them to have a reliable data connection, but this has meant that network connectivity is unavailable to travelers in transit. There are a number of issues related to the management of a mobile wireless network, including the management of the link to the Internet.

Mobile data networks have typically employed data connections to "fixed" infrastructure that allows a single data connection to be maintained for the entire transit period of the network. This has usually resulted in the use of a satellite connection between the wireless access point and the larger data network. This allows a reliable data connection for most locations, but data connections to satellites tend to be both slow, in at least one direction, and expensive.

In other systems, the wireless access point can be configured to actively search for a data network that it can connect to, so that the mobile data network itself becomes a subsidiary network of another wireless network. As the access point travels, it transitions between one network and the next based on the same conditions that mobile computers use to determine the networks that they connect to. This typically results in a connection that transitions from one network to another based on signal strength, even if the new network will only be available for a short period of time due to the projected travel path of the wireless access point. This will result in the wireless access point establishing and tearing down connections more than necessary, which adversely effects the connections that the devices that connect to it have to the Internet.

This method of joining and leaving networks is reactive to incidents such as observed signal strength and temporary network unavailability, and does not take into account that a certain degree of network planning can be used if a planned route is known. Furthermore, by operating in a purely reactive manner, network outages that could have been foreseen occur "unexpectedly" causing a loss of connectivity to the network users.

When providing a connection to a mobile wireless connection, the wireless access point can make use a series of different networks, including both satellite and terrestrial wide area networks (WAN). As is well known, geographical coverage of WAN links in a geographic region is not uniform, but it is typically static. Any in-motion use of these WANs is subjected to the geographical variations in the quality of these links that occur as a result of terrain, distance from the transmission station of the WAN and other known factors.

Currently, in-motion networks that utilize wireless WAN links make decisions based on the criteria described above. These decisions of signal strength and reliability are based on the amplitude of the received signal and packet error rates. These criteria do not allow prediction of WAN coverage holes, regions of congestion and they do not account for the geographical location of the wireless access point.

A system that can anticipate network conditions based on previously provided knowledge and the geographical location of the wireless access point could provide a more reliable network connection, and can employ planning to avoid use of high cost network conditions where possible. Thus, it is desirable to provide such a system.

### SUMMARY OF THE INVENTION

It is an object of the present invention to obviate or mitigate at least one disadvantage of previous network switching management methods and systems.

In a first aspect, the present invention provides a method of managing a wireless network connection for a mobile wireless device. The method comprises the steps of determining a location of the wireless device; and acting on a network connection in accordance with the determined location. In embodiments, the step of determining the location of the wireless device can include one of obtaining Global Positioning System location information, triangulating the position of the wireless device based on signals received from known radio frequency stations, receiving a signal from a position marker and performing a calculation in accordance with at least one of the time and distance traveled along a fixed route. In other embodiments, the step of acting on a network connection includes at least one of caching user requests, reporting a network outage to users connected to the wireless device, forming a new connection and maintaining an existing network connection.

In a further embodiment, the method includes the step of anticipating a network event based on the determined location and the step of acting on a network connection includes both determining a network connection action in accordance with the determined location and the anticipated network event and performing the determined network connection action. In other embodiments, the network event is one of a long or short term network outage and the availability of a new network connection.

In a second aspect of the present invention, there is provided a wireless network connection management system for proactively managing the connection of a wireless device to at least one wireless network based on external information. The system comprises a location profiles database, a location service, a router and a network monitor. The location profiles database stores network connectivity data for at least one location. The location service determines the present location of the wireless device. The router connects the wireless device to the at least one wireless network. The network monitor receives a determined present location from the location service, receives network connectivity data from the location profiles database and controls the connection of the router to the at least one wireless network in accordance with the determined present location and the network connectivity data. In an embodiment of this aspect of the present invention, the connection management system includes a logger for receiving the location information and network availability information from the network monitor and for updating the location profiles database based on the location information and network availability.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Fig. 1 is a block diagram illustrating a system of the present invention;
Fig. 2 is a block diagram illustrating a system of the present invention in an operating environment with a network connection;
Fig. 3 is a is a block diagram illustrating a system of the present invention in an operating environment having a network deadzone;
Fig. 4 is a is a block diagram illustrating a system of the present invention in an operating environment with a network connection to a satellite WAN connection; and
Fig. 5 is a flowchart illustrating a method of the present invention.

### DETAILED DESCRIPTION

Generally, the present invention provides a system whereby an in-motion wireless device may pro-actively switch between wireless WAN links. This invention allows an in-motion wireless device to trigger an attempt to use a network based on foreknowledge that a network is likely to be desirable or undesirable when said in-motion wireless device is in a certain geographic area.

More particularly, the present invention discloses a system whereby a wireless device can proactively switch between wireless WAN links based on geographic location to maximize available bandwidth, whereby an in-motion wireless device can prepare ahead of time to switch to alternate networks based on foreknowledge of the performance of different networks in different geographic locations.

Mobile wireless networks can be represented by a wireless access point or other such wireless devices. This component connects the mobile wireless network to the WAN, and as such, if the access point cannot access the WAN, no device in the network, can. One skilled in the art will appreciate that a mobile wireless network can employ a number of access points geographically spaced from each other and connecting to each other on a data level, so that if one of the access points can connect to a WAN, the others can obtain a connection to that WAN through the single access point.

Mobile wireless networks typically travel defined routes or are at least limited in the region in which they travel. Wireless networks with defined routes can include those on trains, busses, subway cars, streetcars and airplanes, while those whose routes are limited may include wireless networks in hired vans and cars.

For both these scenarios, a map of the travel route or region can be built, and the areas supported by different WANs can be superimposed on the map. This can allow for intelligent network planning that allows the wireless access point to connect to proactively act. When a known network dead area is approaching, data can be prefetched from the network in anticipation of user requests, and any requests generated by the users during the network outage can be cached if it is known that the outage is merely temporary. If the outage is known to be a large area, then the network can decline the user's requests and instead report a network failure. This allows for a more seamless user experience.

Though illustrated in the accompanying figures as applying to rail cars, the present invention can be applied to any mobile network solution.

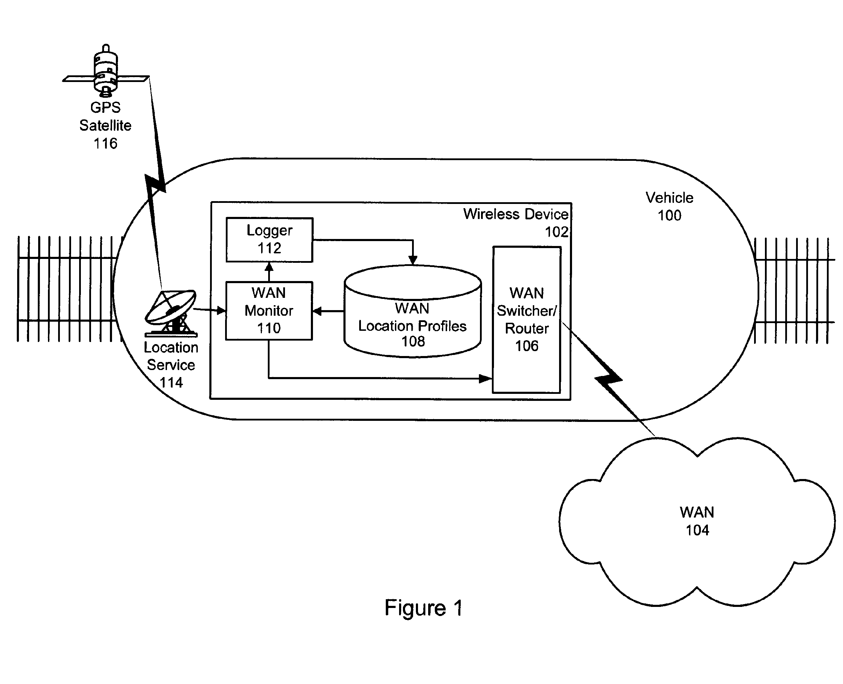

Figure 1 illustrates an operating environment for the system and method of the present invention. A vehicle **100** travels along a path, in the illustrated embodiment a fixed path defined by the track, and carries a wireless device (WD) **102**. WD **102** can connect to wide area network (WAN) **104** and act as a bridge to other wireless connection enabled devices, or it can be used to simply connect to WAN **104** for its own private connection. The connection to WAN **104** is typically an RF connection such as a mobile cellular data connection or a satellite connection. Numerous other wireless data connections known in the art can be supported. WD **102** connects to WAN **104** through WAN switch/router **106**.

WD **102** stores a map of WAN coverage in WAN location profiles database **108**. This mapping allows WAN monitor **110** to make decisions about WAN coverage based on upcoming events. To determine that a coverage change is approaching, logger **112** makes use of geographic information provide by location service **114**.

Location service **114** provides external information to logger **112** and WAN manager **110**. This information can be obtained from GPS satellite **116** as illustrated, or other geographic referencing systems including terrestrial infrastructure tools. Terrestrial tools such as cellular tower triangulation, time-distance measurements for fixed path vehicles or boundary delimination signals can be employed to provide location data through location service **114**. Ideally, WD **102** does not see any difference in the output of Location Service **114** based on its method of obtaining the geographic location information.

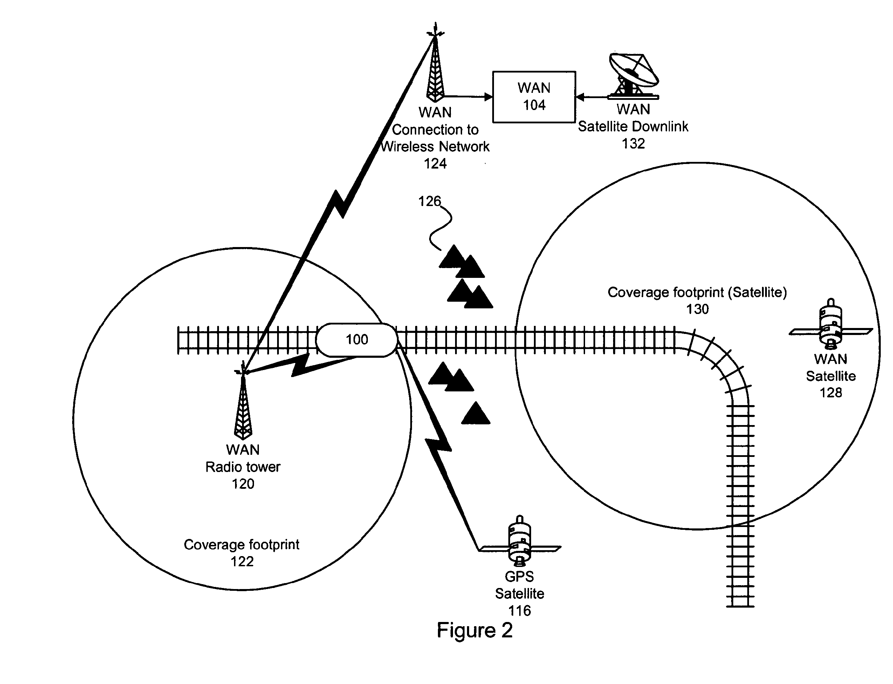

Figure 2 illustrates a broader environment in which the present invention can operate. Vehicle **100** connects to WAN **102** through radio tower **120**, which has a coverage footprint **122**. While vehicle **100** is inside footprint **122** it can communicate to tower **120**, which can relay a signal to tower **124** to create a connection to WAN **102**. The size and shape of footprint **122** is a function of the placement of tower **120**, the transmitter power and terrestrial features **126**. As vehicle **100** travels along its path, terrain **126** will block signals to WAN **102**. Due to the GPS satellite **116**, WD 1021 on vehicle **100** can determine that it is going to leave footprint **122** and will not enter footprint **130** of WAN satellite **128**, which provides access to WAN **104** through downlink gateway **132**, until terrain **126** has been traversed. This prior knowledge of position and network coverage provides WD **102** the ability to proactively pre-fetch information and begin caching content so that some connectivity can be provided to any node connection to WAN **104** through WD **102**.

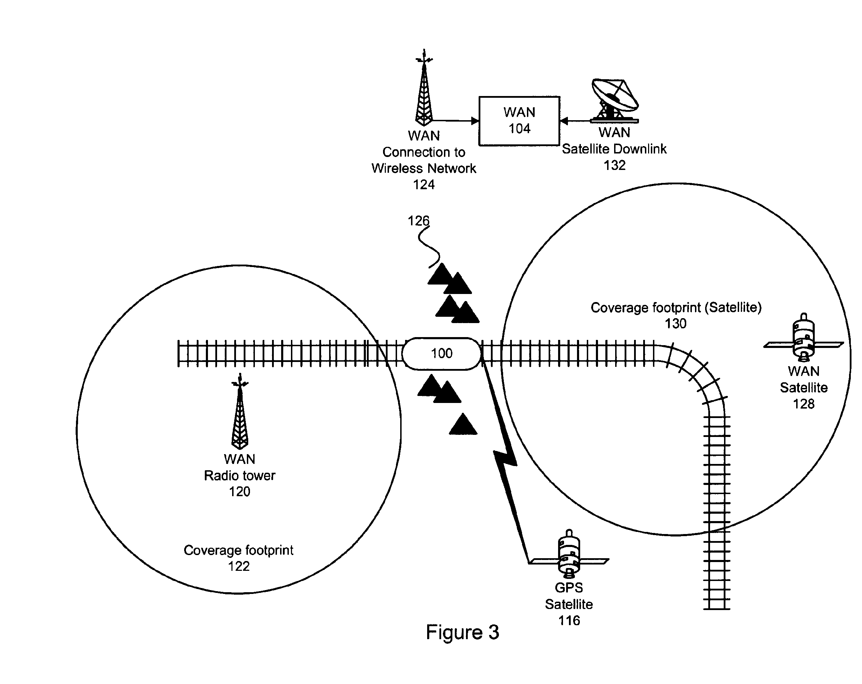

Figure 3 illustrates vehicle **100** in a connectivity deadzone between footprints **122** and **130**.

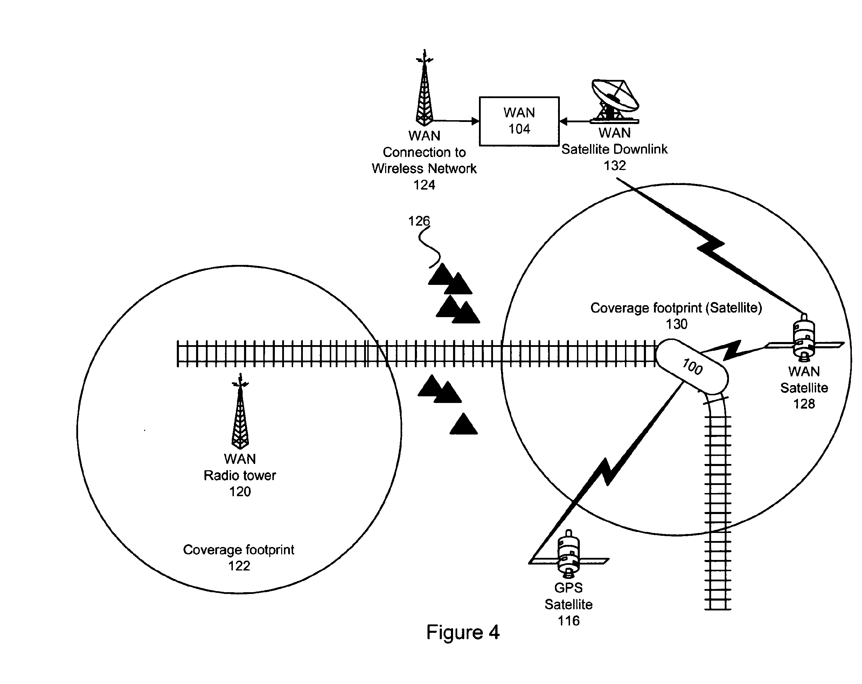

Figure 4 illustrates vehicle **100**, having left the deadzone caused by terrain **126**, inside footprint **130** of satellite **128**, which connects WD **102** to WAN **104** via downlink gateway **132**.

While a conventional WD would have continued through footprint **122** until a signal was no longer available. At that point, WD 1021 would begin hunting for a new network to attach to. This would consume both power and processing resources as all links were scanned to fine a new connection. This process would have continued until vehicle **100** entered footprint **130**. In contrast, use of WAN locations profiles database and location service **114** allows WAN manager **110** to anticipate service interruptions and resumptions allowing WD **102** to efficiently handle changing network conditions.

As logger **114** receives location information from location service **114**, it can identify important location information that has been previously identified. This identified location information can be provided to WAN location profiles database **108** as a query, whose result is passed to WAN monitor **110**. WAN monitor **110** can analyze the results provided by WAN location profile database **108** to determine that there is an upcoming change in WAN connectivity. This information can be used to control WAN switcher/router **106** so that a connection to WAN **104** can be maintained as vehicle **100** moves between coverage areas. Additionally, if WD **102** detects changes to the availability of wireless networks, logger **114** can update WAN location profile database **108** to reflect this change. By allowing logger **114** to dynamically update WAN location profile database **108**, WD **102** will be able to make use of that information in the future in the selection of the best available network connectivity.

In an unillustrated embodiment, vehicle **100** can be in the footprint of two different connections to WAN **104**. WAN monitor **110** can determine, in accordance with WAN location profiles database **108** and location services **114,** which connection to WAN **104** should be used. While conventional systems typically use a ranked list of networks or a signal strength measurement to determine which connection to WAN **104** should be employed, the present invention can take into account other factors, such as the amount of time that either network would be available based on the current route. Even if one of the connections has a higher strength, it may not be available for as long, and as such would require more connection switching, which adversely effects network performance, and as such the WAN monitor **110** can maintain the connection that maximizes overall network performance, not just the immediate performance.

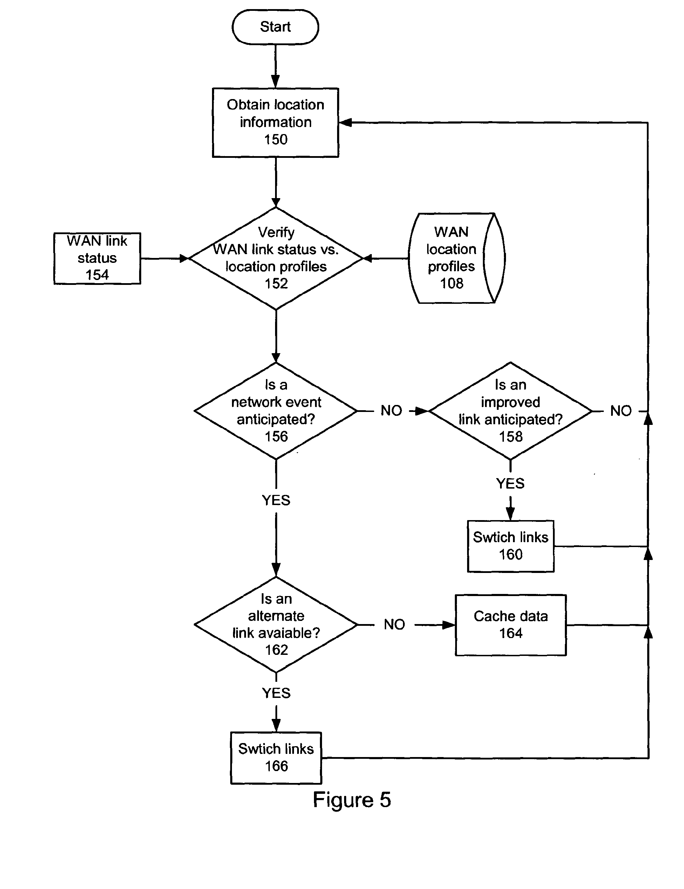

Figure 5 illustrates a method of the present invention. The method starts, and proceeds to step **150**, where WD **102** receives information from location service **114**. In step **152**, the WAN link status **154** and the WAN location profiles database **108** are verified against each other so that the accuracy of the WAN location profiles database can be verified. Changes in the network layout, such as an increased tower footprint can be determined in this manner to allow for later updating of the WAN profiles database **108**. In step **156** the WAN profiles database **108** information and the location service **114** information are used to determine whether a network failure is imminent. If no network failure is imminent, the system determines, in step **158**, whether or not an improved network connection will soon be available. If no network improvement is imminent, the process returns to step **150**. If a network improvement is imminent, WAN monitor **110** instructs WAN switcher/router **106** to attach to the new connection to WAN **104**, in step **160**, and the process then returns to step **150**.

If in step **156**, an imminent network failure is anticipated, the WAN manager **110**, in conjunction with location service **114** and WAN location profiles database **108** determines if another WAN link is available. If a new link is unavailable, outbound data is cached to avoid data loss in step **164**. At this point, data can be prefetched if resumption of link availability is anticipated (e.g. a link loss due to a tunnel is anticipated). Upon completion of the caching, the method returns to step **150,** and a new link to WAN **104** is sought. If, in step **162**, it is determined that another link is available, WAN monitor **110** instructs WAN switcher/router to switch to the alternate WAN link in step **166** and the process returns to step **150**.

One skilled in the art will appreciate that the method outlined above can be modified without departing from the scope of the present invention. In one embodiment, WD **102** determines its location. Based on the location, WD **102** anticipates a network event, and then acts on the network connection based on the anticipated event. The determination of the location can be done by any of a number of know techniques including obtaining GPS data from a satellite, performing a time-distance measurement for a fixed path vehicle such as a train car, and triangulating a position based on the strength of signal received from radio towers having known transmission powers and locations. The anticipation of a network event is preferably performed based on the known location and data in the WAN location profiles database **108**. The event could be a temporary connection outage, a change in the available connections, a long-term connection outage or any of a number of other network events. The action taken as a result of the anticipated network event can include caching network requests and proactive pre-fetching of data, reporting to any node connecting to WD **102** that network functionality is unavailable (with the option of reporting when connectivity will likely be available again), maintaining the current connection (in view of another available connection), and creating a new network connection (either as switching from a current connection or forming a connection from an unconnected state).

One skilled in the art will further appreciate that many of the decisions can be made based purely upon the information provided by the location service **114** with a set of rules stored in WAN location profiles database **108**. The determination of an anticipated network event can, in some embodiments, be implicit in the step of acting on the network connection. In these embodiments, the location service **114** and the WAN location profiles database **108** can operate as a rule driven connection management system instructing WAN manager **110** to modify its behavior based solely on the location of the vehicle and a previously determined priority set. In this embodiment, a network planner can determine that at certain locations, WD **102** will encounter certain network events (such as loss of service or the availability of a new connection) and can then have WAN manager **110**, in conjunction with location service **114** and the WAN location profiles database **108**, take an action based solely upon the location information, and not provide WD **102** with any information regarding the upcoming network events. In this embodiment, the anticipation of a network event is performed in advance and a set of decisions is made in advance. The decision is then simply selected based on the location information.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method of managing a wireless network connection for a mobile wireless device, the method comprising:
determining a location of the wireless device; and
acting on a network connection in accordance with the determined location.

2. The method of claim 1 further including the step of anticipating a network event based on the determined location.

3. The method of claim 2 wherein the step of acting on a network connection includes:
determining a network connection action in accordance with the determined location and the anticipated network event; and
performing the determined network connection action.

4. The method of any preceding claim wherein the step of determining the location of the wireless device includes obtaining Global Positioning System location information.

5. The method of any preceding claim wherein the step of determining the location of the wireless device includes triangulating the position of the wireless device based on signals received from known radio frequency stations.

6. The method of any preceding claim wherein the step of determining the location of the wireless device includes receiving a signal from a position marker.

7. The method of any preceding claim wherein the step of determining the location of the wireless device includes performing a calculation in accordance with at least one of the time and distance traveled along a fixed route.

8. The method of any preceding claim wherein the step of acting on a network connection includes caching user requests.

9. The method of any preceding claim wherein the step of acting on a network connection includes reporting a network outage to users connected to the wireless device.

10. The method of any preceding claim wherein the step of acting on a network connection includes forming a new connection.

11. The method of any of claims 1 to 9 wherein the step of acting on a network connection includes maintaining an existing network connection.

12. The method of claim 2 or 3 or any of claims 4 to 11 as dependent upon claim 2, wherein the network event is a network outage.

13. The method of claim 12 wherein the network outage is a short term network outage.

14. The method of claim 12 wherein the network outage is a long term network outage.

15. The method of claim 2 or 3 or any of claims 4 to 11 as dependent upon claim 2 wherein the network event is the availability of a new network connection.

16. A wireless network connection management system for proactively managing the connection of a wireless device to at least one wireless network based on external information, the system comprising:
a location profiles database for storing network connectivity data for at least one location;
a location service for determining the present location of the wireless device;
a router for connecting the wireless device to the at least one wireless network; and
a network monitor for receiving a determined present location from the location service, for receiving network connectivity data from the location profiles database and for controlling connection of the router to the at least one wireless network in accordance with the determined present location and the network connectivity data.

17. The system of claim 16 further including a logger for receiving the location information and network availability information from the network monitor and for updating the location profiles database based on the location information and network availability.
